Europäisches Patentamt

European Patent Office

Office européen des brevets

(19)

(11) Veröffentlichungsnummer: **0 257 129**
**B1**

(12) # EUROPÄISCHE PATENTSCHRIFT

(45) Veröffentlichungstag der Patentschrift:
11.04.90

(51) Int. Cl.⁴: **H04N 11/00, H04N 5/208**

(21) Anmeldenummer: 86111978.2

(22) Anmeldetag: 29.08.86

(54) Verfahren zur Wiedergabe von Fernsehsignalen mit verbesserter Bildqualität.

(43) Veröffentlichungstag der Anmeldung:
02.03.88 Patentblatt 88/9

(45) Bekanntmachung des Hinweises auf die Patenterteilung:
11.04.90 Patentblatt 90/15

(84) Benannte Vertragsstaaten:
DE FR GB NL

(56) Entgegenhaltungen:
WO-A-83/02704

NACHRICHTENTECHNISCHE ZEITSCHRIFT N.T.Z,
Band 39, Nr. 4, April 1986,
Seiten 226-228,230-232,234-236, Berlin, DE; H.
SCHÖNFELDER et al.: "Verbesserung der
Farbfernseh-Bildqualität durch digitale
Videosignalverarbeitung"

(73) Patentinhaber: ANT Nachrichtentechnik GmbH,
Gerberstrasse 33, D-7150 Backnang(DE)

(72) Erfinder: Wendland, Broder, Prof. Dr.-Ing., Am
Stadtgarten 58, D-4355 Waltrop(DE)
Erfinder: Schröder, Hartmut, Dr.-Ing., Weisse Taube 30,
D-4600 Dortmund 50(DE)
Erfinder: Elsler, Hertwig, Dipl.-Ing., Alte Strasse 25,
D-4600 Dortmund 1(DE)
Erfinder: Becker, Peter, Dipl.-Ing., Tulpenstrasse 33,
D-4600 Dortmund 41(DE)

(74) Vertreter: Wiechmann, Manfred, Dipl.-Ing. et al, ANT
Nachrichtentechnik GmbH
Gerberstrasse 33 Postfach 11 20, D-7150 Backnang(DE)

# Beschreibung

Die Erfindung betrifft ein Verfahren gemäß dem Oberbegriff des Patentanspruchs 1.

Ein Verfahren zur Verbesserung der Bildqualität ist aus der EP 57 826 A2 bekannt. Bei diesem Verfahren ist eine fehlerfreie Bildabtastung und eine zeilenfreie Rekonstruktion bei Übertragung über einen genormten Übertragungskanal mit erhöhter Detailauslösung möglich. Das Fernsehsignal wird sendeseitig zeilenweise mit doppelter Normzeilenzahl abgetastet, vertikal bzw. planar vorgefiltert und einer Abtastwandlung zur Erzeugung eines Zeilensprungsignals unterzogen. Nach der Übertragung über einen bandbegrenzten Standardkanal erfolgt eine entsprechende Abtastrückwandlung und eine Nachfilterung zur Rekonstruktion und Interpolation der bei der Vorfilterung auf der Sendeseite unterdrückten Information. Die Wiedergabe erfolgt mittels eines Empfangsmonitors mit erhöhter Zeilenzahl.

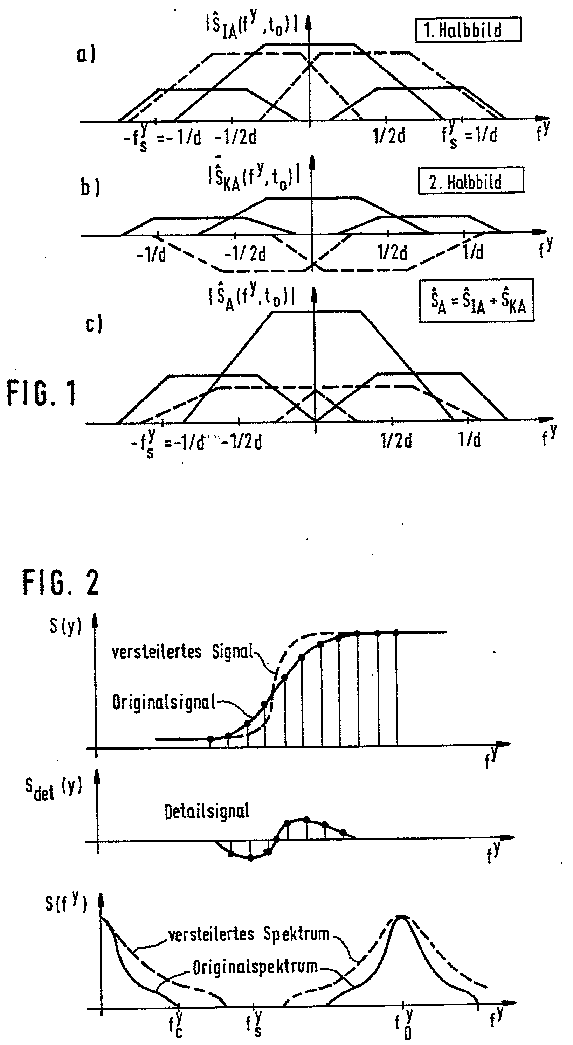

Herkömmliche Verfahren zur Kantenversteilerung (beispielsweise Fernseh- und Kinotechnik, 1971, Nr. 5, Seiten 174-176) sind bei Fernsehsignalen nur stark eingeschränkt anwendbar. Wegen der starken spektralen Überlappung der Fernsehsignalspektren führt eine nichtlineare vertikale Kantenversteilerung stets zur Verstärkung eben dieser spektralen Überlappungen. Fig. 1 verdeutlicht diese Überlappung der Spektren bei Zeilensprung nach vertikaler (in Richtung vertikaler Ortsfrequenzen f$v$) nichtlinearer Kantenversteilerung.

Die jeweils im Halbbild in den Kanten versteilerten Signale mit den zugehörigen synthetischen Spektren sind in hohem Maße ungleich. Es treten in jedem Halbbild mit von Halbbild zu Halbbild wechselnden Vorzeichen Halbbildaliasspektren (gestrichelt) auf.

Diese sollten vom Auge integriert, d.h. wechselseitig kompensiert werden. Zu einem Zeitpunkt t$p$ sind aber die Halbbilder unterschiedlich lange abgeklungen, sie werden vom Auge nur unzureichend kompensiert. Dieser Kompensationsprozeß ist bei nichtlinearer Kantenversteilerung (d.h. spektrale Ausdehnung) ersichtlich weiter erschwert. Das bedeutet, daß die 25 Hz Flackerstörungen an Kanten und hochfrequenten Details verstärkt auftreten.

Aus der Veröffentlichung "C. Rint, Handbuch für Hochfrequenz- und Elektro-Techniker, Bd. 3, 1979, Seiten 643 bis 645" ist es bekannt, zur Verminderung der Pulsanstiegszeit (Kantenversteilerung) eines Schwarzweißsprungs durch zweimaliges Differenzieren des Eingangssignals ein Korrektursignal zu gewinnen, das zum Eingangssignal mit negativem Vorzeichen addiert wird. Auch kann bei dieser Veröffentlichung eine Signalabtastung erfolgen.

Aus Wissenschaftliche Berichte AEG Telefunken, Band 45, Nr. 1/2, 1972, Seiten 36–47, Berlin, DE; P. Zamperoni: "Die Verbesserung der Bildqualität bei tiefpassbegrenzten Fernsehsignalen" ist es bekannt, ein synthetisches Korrektursignal zur Flankenversteilerung aus den zeitlichen Ableitungen des Videosignals zu erzeugen und dieses synthetische Korrektursignal dem Videosignal linear oder quadratisch zuzusetzen, um ein korrigiertes Videosignal zu erzeugen. Die Flankenversteilerung erfolgt sort durch eine spektrale Extrapolation, d.h. eine Gewinnung eines verbesserten Signals durch Fortführung des spektralen Verlaufs über die Bandgrenze des Videosignals hinaus.

Aufgabe der Erfindung ist es, das Verfahren gemäß dem Oberbegriff des Patentanspruchs 1 so auszubilden, daß nichtlineare Kantenversteilerungen möglich sind, ohne Flackerstörungen hervorzurufen, wobei der sendeseitige Aufwand minimal sein soll und volle Kompatibilität gewährleistet sein soll. Diese Aufgabe wird durch die kennzeichnenden Merkmale des Patentanspruchs 1 gelöst. Die Unteransprüche zeigen vorteilhafte Weiterbildungen auf.

Die Erfindung beruht auf folgender Erkenntnis: Bei Übertragung eines Standardsignals und empfangsseitiger Interpolationsfilterung zur Gewinnung eines hochzeiligen Signals für die Wiedergabe auf einem HDTV-Monitor entstehen spektrale Lücken, die ohne Gefahr der Überlappung zur nichtlinearen Kantenversteilerung genutzt werden können. Mit diesem Ansatz ist eine grundsätzlich neue Technik der Kantenversteilerung möglich. Dabei sind prinzipiell zwei Möglichkeiten zur Kantenversteilerung realisierbar, nämlich
- die Addition von Detailsignalen,
- der Ersatz der Originalkante durch eine synthetische Kante.

Anhand der Zeichnungen wird das Verfahren gemäß der Erfindung nun näher erläutert. Es zeigen

Fig. 2 die nichtlineare vertikale Kantenversteilerung durch Detailsignaladdition für hochzeilig interpolierte Fernsehsignale,

Fig. 3 das Fourierspektrum des empfangsseitig einer Aufwärtskonversion unterzogenen Bildsignals mit Lücken und Filterung mit Monitorübertragungsfunktion,

Fig. 4 ein Beispiel für eine vertikale kantenversteilernde Detailsignaladdition (Blockschaltbild),

Fig. 5 ein Beispiel für die Kantenversteilerung durch Detailsignalbildung:
1. Ableitung • 2. Ableitung
  a) Detailsignalbildung durch ideale Ableitungen,
  b) Detailsignalbildung durch Differenzen längs einer Kante.

Fig. 6 die Kantenversteilerung durch synthetische Korrektursignale (Blockschaltbild),

Fig. 7 ein Modell zur Bildung des synthetischen Korrektursignals,

Fig. 8 ein vorkorrigiertes synthetisches Kantensignal,

Fig. 9 die horizontale und vertikale Kantenversteilerung mit empfangsseitiger orthogonaler Interpolationsfilterung zur Kantendetektion,

Fig.10 die bewegungsadaptive Vollbildwiedergabe mit Interpolationsfilterung und nichtlinearer Kantenversteilerung
  a) nichtlineare vertikale Kantenversteilerung im Vollbild,
  b) nichtlineare vertikale Kantenversteilerung im Halbbild.

IBeim Verfahren "Addition von Detailsignalen" wird beispielsweise aus dem Originalsignal durch nichtlineare Verarbeitung an einer Kante ein Detailsignal erzeugt. Dieses Detailsignal wird an Kanten signalabhängig zum vorgefilterten Fernsehsig nal addiert (Fig. 2). Es entsteht das versteilerte Signal. In Fig. 2 ist jeweils die Spektralfunktion S(y) in Abhängigkeit der vertikalen Ortsfrequenz fy dargestellt.

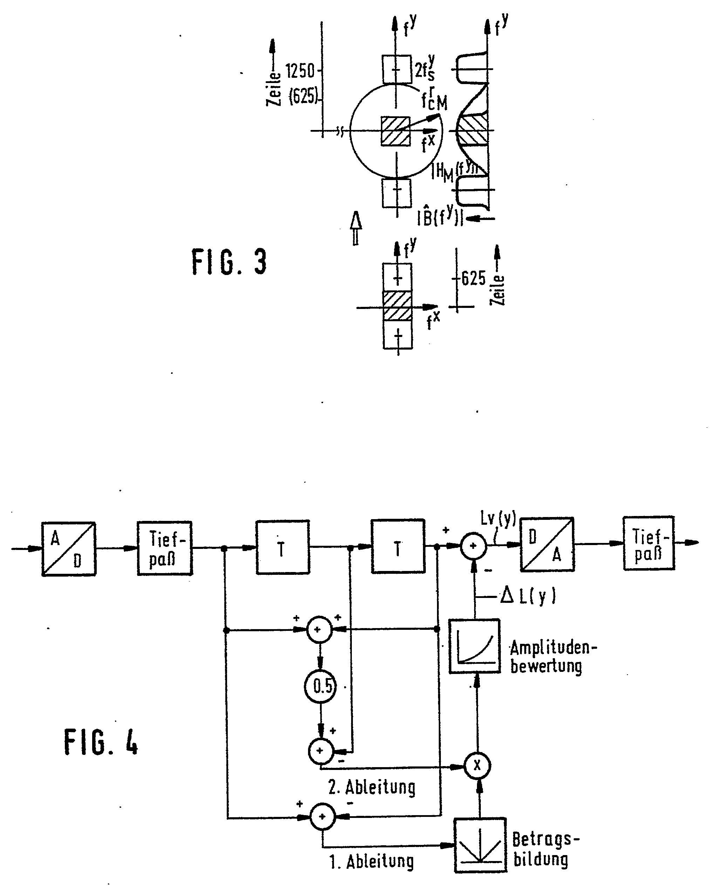

$f_s y$ bezeichnet die Abtastfrequenz in vertikaler Richtung und $f_c y$ die Grenzfrequenz in vertikaler Richtung. Im Fourierbereich entspricht die Versteilerung im Bereich der Kante einer spektralen Erweiterung, die für ein hochzeilig interpoliertes Signal die Lücken teilweise wieder füllt, was bei vertikaler Verarbeitung sehr kontrolliert erfolgen muß. Die sendeseitige Bildaufnahme erfolgt mit Normzeilenzahl, beispielsweise mit 625 Zeilen. Die Spotwirkung der Aufnahmekamera führt zu einer gewissen Vorfilterung und Bandbegrenzung des Sendesignals. Die Übertragung erfolgt mit Normzeilenzahl, beispielsweise 625 Zeilen und ist somit kompatibel. Im Empfänger wird eine Interpolationsfilterung vorgenommen, d.h. aus dem Standardzeilenbildsignal mit beispielsweise 625 Zeilen wird ein Hochzeilenbildsignal mit beispielsweise 1250 Zeilen für die Wiedergabe auf einem HDTV-Monitor erzeugt. Das Interpolationsfilter gewinnt also zwischen zwei benachbarten Zeilen eine interpolierte Zwischenzeile. Durch diese Aufwärtskonversion entstehen, wie Fig. 3 zeigt, im Fourierspektrum Lücken. Diese Lücken ermöglichen eine zeilenfreie, d.h. fehlerfreie Bildwiedergabe. Dies ist besonders wichtig z.B. bei Text- und Grafikwiedergabe.

Bei einem empfangsseitig so interpolationsgefilterten Signal entsteht durch die fehlende Zeilenstruktur subjektiv der Eindruck der Unschärfe. Das Bild erscheint teilweise "flau", insbesondere in schwach strukturierten Bereichen. Hier ist es nun möglich, mit nichtlinearen Methoden eine Erweiterung des Spektralgehaltes bis in die spektralen Lücken vorzunehmen, ohne Aliasfehler zu verstärken. Das bedeutet, daß eine nichtlineare vertikale Kantenversteilerung vorgenommen werden kann, die weit ausgeprägter sein darf als bei herkömmlichen Fernsehsystemen.

Nachfolgend wird ein Ausführungsbeispiel zum Durchführen des Verfahrens "Addition von Detailsignalen" vorgestellt. Das Blockschaltbild dieses Beispiels zeigt Fig. 4. Das Korrektursignal, das dem ursprünglichen Bildsignal hinzuaddiert wird, wird hierbei durch Differenzbildung an einer Kante erzeugt. Das Empfangssignal wird analog/digital gewandelt und tiefpaßgefiltert. Anschließend werden mittels der beiden T-Glieder, die jeweils eine Zeilenverzögerung bewirken, drei Additionsstufen sowie einer Amplitudenbewertungsstufe mit dem Bewertungsfaktor 0,5 Differenzen gebildet, die näherungsweise die erste und zweite Ableitung des Bildsignals erzeugen. Nach der Betragsbildung der ersten Ableitung werden erste und zweite Ableitung miteinander multipliziert. Das so erzeugte Korrektursignal wird nach einer nichtlinearen Amplitudenbewertung an der Kante zum ursprünglichen Signal addiert. Anschließend erfolgt eine digital/analoge Rückwandlung und eine Tiefpaßfilterung.

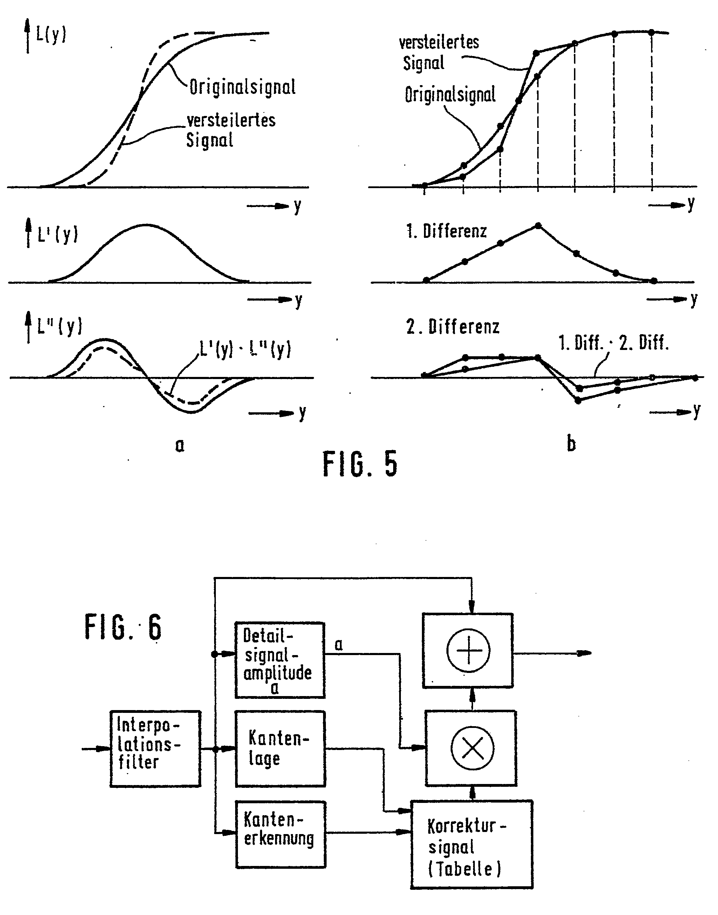

Fig. 5a zeigt die Funktionsweise des angegebenen Verfahrens für kontinuierliche Signale, Fig. 5b zeigt die zugehörigen Näherungen, die durch das Abtastraster bedingt sind. Aus dem Originalsignal L(y) werden die 1. und 2. Ableitung bzw. die 1. und 2. Differenz gebildet. Durch Multiplikation entsteht ein Korrektursignal, das dem Originalsignal (mit invertiertem Vorzeichen) zugefügt wird.

Für das Korrektursignal $\Delta L(y)$ und das versteilerte Signal $L_v(y)$ ergibt sich mit k als nichtlinearer Amplitudenbewertung:
$$\Delta L(y) = k \cdot |L'(y)| \cdot L''(y) \quad (1)$$
$$L_v(y) = L(y) - \Delta L(y) \quad (2)$$

Es ist mit diesem Verfahren eine erhebliche Verringerung der Anstiegszeit zu erreichen, die auch in einer deutlichen Verbesserung des subjektiven Bildeindrucks insbesondere der Bildschärfe zum Ausdruck kommt.

Ersichtlich ist jedoch das Detailsignal $\Delta L(y)$ quadratisch abhängig von der Amplitude der Sprunghöhe. Das bedeutet, daß mit einer großen Sprungamplitude auch eine starke Anhebung erfolgt. Dies kann zum Auftreten von Konturenbildung führen - obwohl bei kleineren Sprüngen noch eine Versteilerung wünschenswert wäre. Ebenfalls treten bei zu starker Korrektur und Zeilensprungwiedergabe Flackererscheinungen auf - besonders an großen Amplitudensprüngen, die wie beschrieben besonders stark korrigiert werden.

Wichtig ist in diesem Zusammenhang noch eine Betrachtung des Rauschverhaltens. Betrachtet man Gl. (1,2), so erhält man für das versteilerte Signalspektrum (* Faltungsoperator)
$$L_v(fy) = L(fy) - k \cdot |L'(fy)| * L''(fy)$$
$$= L(fy) + k \cdot |j\omega \cdot L(fy)| * \{\omega^2 L(fy)\} \quad (3)$$

Ersichtlich gehen in das Detailsignal die Rauschanteile des Originalsignales unmittelbar ein. Es ergibt sich zudem eine spektrale Bewertung mit einer höheren Potenz der Signalfrequenz, so daß insbesondere bei quadratisch ansteigendem (Kamera-) Rauschleistungsdichtespektrum doch eine deutliche Rauschverstärkung zu erwarten ist. Zwar sinkt die Rauschempfindlichkeit des visuellen Systems mit steigender Ortsfrequenz, zusätzlich maskiert eine Kante in gewissem Umfang Rauschstörungen, es ist aber ein prinzipieller Nachteil der klassischen Detailsignaladdition, daß in gewissem Umfang eine Addition von korreliertem Rauschen stattfindet.

Zu dem zuvor beschriebenen Verfahren der Detailsignaladdition besteht die Alternative eines Austausches der Originalkante durch eine synthetische Kante. Dieses Vorgehen bietet den Vorteil einer einfach kontrollierbaren spektralen Erweiterung. Es erfordert allerdings die Extraktion aller Signalparameter, die für die Kante bestimmend sind, also: Lage der Kante, Steigung, Amplitude und mittlere Helligkeit.

Dabei sind unterschiedliche Techniken möglich:
Eine Technik besteht darin, als Signalformparameter des Eingangssignals Anfangsamplitudenwert, Endamplitudenwert und Ort des Kantenmittelpunktes feststellen. Daraus wird das synthetische Sprungsignal errechnet und bei der Wiedergabe des Sprungsignals auf das synthetische Signal umgeschaltet.

Vorteil dieser Technik ist es, daß eine exakte Anpassung des Sprungverlaufes an den für das gegebene Wiedergabesystem optimalen Verlauf möglich ist. Nachteil ist jedoch die Gefahr, aufgrund von Meß- und Rechenfehlern einen Umschaltsprung zwischen dem gegebenen Bildsignalverlauf und dem synthetischen Signal zu erzeugen, wenn deren Randwerte nicht identisch sind.

Aufgrund dieser Überlegungen wird deshalb nachfolgend ein Verfahren vorgestellt, das die Vorteile der Detailsignaladdition
- natürlicher Bildeindruck,
- keine Umschaltsprünge,
- einfache Realisierbarkeit,
verknüpft mit den Vorteilen der synthetischen Kantensignalerzeugung:
- keine direkte Rauschanhebung,
- direkt bestimmbare spektrale Erweiterung,
- exakte Anpassung des Sprungverlaufes an das Wiedergabesystem.

Anstatt zwischen dem Eingangssignal (Empfangssignal mit Standardzeilenzahl) und einem vollständig synthetischen Signal umzuschalten, wird das versteilte Signal erfindungsgemäß durch Addition eines synthetischen Korrektursignals erzeugt. Dabei wird mit der Addition dieses Korrektursignals ein idealer Sprungverlauf angenähert. Damit können die Vorteile beider Verfahren im wesentlichen realisiert werden.

Zur Kantenversteilerung durch synthetische Korrektursignale eignet sich vorzugsweise die Anordnung gemäß Fig. 6. Bei diesem Verfahren werden Kantenlage und Sprunghöhe der Kante berechnet, und es wird aus dem (durch die Filterflanke der Interpolationsfilterung festgelegten) Sprungverlauf durch Addition eines synthetischen Korrektursignals eine synthetische Sprungflanke erzeugt (vgl. Fig. 6).

Die Signalparameter werden aus den Ableitungen (bzw. Differenzenquotienten) des Signals berechnet und steuern einen Speicher an, in dem das normierte synthetische Korrektursignal in Tabellenform verfügbar ist (RAM). Dieses Korrektursignal, das in seinem Verlauf den Parametern des Widergabesystems und des visuellen Systems angepaßt ist, wird mit der aus der Sprunghöhe abgeleiteten Detailsignalamplitude a multipliziert und zum ursprünglichen Signal hinzuaddiert.

Die Detailsignalamplitude a kann aus der Sprunghöhe h der Kante abgeleitet werden durch eine geeignete nichtlineare Funktion. Beispielsweise hat sich folgender nichtlinearer Zusammenhang als besonders vorteilhaft erwiesen:

$$a = 0 \quad -h_S < h < h_S \quad (1)$$
$$a = k(h-h_S) \quad h \geq h_S \quad (2)$$
$$a = k(h+h_S) \quad h \leq -h_S \quad (3)$$

Hierbei wird in einem Bereich kleiner Sprungamplituden $-h_S < h < h_S$ keine Versteilerung vorgenommen. Auf diese Weise kann vermieden werden, daß schwach ausgebildete Kanten unnatürlich angeschärft werden. Ebenfalls kann vermieden werden, daß weiche Kanten unnatürlich versteilt werden, da die gemessene Sprunghöhe bezogen auf das Abtastraster auch bei weichen Kanten unterhalb der Schwelle $h_S$ bleibt. Schließlich wird durch diese Schwellbildung eine Anschärfung von häufigen kleineren Rauschstörungen ausgeschlossen. An diesem Bereich (1) mit a = 0 schließt sich der Proportionalbereich (2), (3) an, der weich einsetzend für eine natürliche Amplitudenbewertung sorgt und bei Entscheidungsunsicherheiten "busy edges" verhindert.

Es sind hierbei durch den bekannten Verlauf der Sprungflanke definierte Aussagen über die maximale spektrale Erweiterung des Signals möglich. Es können unmittelbar Angaben über die resultierende Belegung der spektralen Lücken gemacht werden, was insbesondere bei Zeilensprungdarstellung von Bedeutung ist.

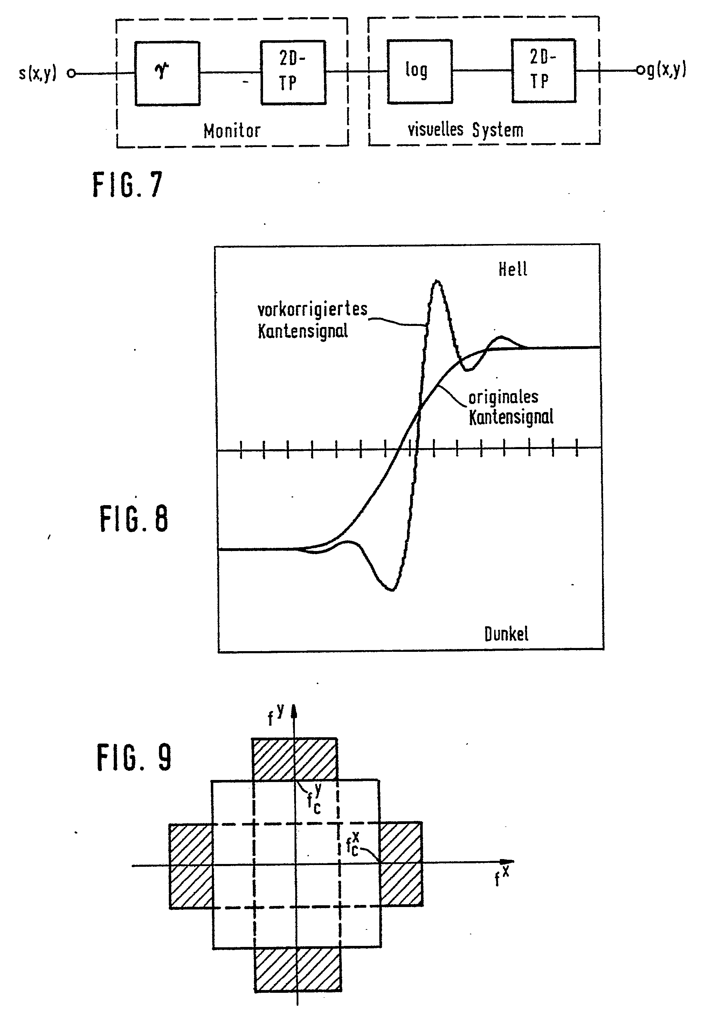

Für die Ermittlung der Korrektursignale wird dabei das in Fig. 7 dargestellte Modell zugrunde gelegt. Die nichtlineare $\gamma$-Kennlinie und eine zweidimensionale Tiefpaßfilterung (Monitorspot) beschreiben die Wirkung des Monitors. Die logarithmische Rezeptorkennlinie und ein zweidimensionaler Tiefpaß ersetzen näherungsweise die Wirkung des visuellen Systems.

Aus diesem Modell kann näherungsweise ein vorkorrigiertes Kantensignal s(x,y) errechnet werden für ein optimales Kantensignal g(x,y) am Ausgang des Modells. Ein möglicher Ansatz ist dabei beispielsweise die Annahme einer linearen Optimierung des vorkorrigierten Kantensignals in Verbindung mit dem Übertragungssystem. Daraus ergibt sich das synthetische Korrektursignal durch Differenzbildung mit der durch das Übertragungssystem vorgegebenen maximal steilen Kantenflanke.

Für die Ermittlung der Korrektursignale ergeben sich hieraus folgende Konsequenzen:
- Die Gamma-Vorkorrektur in der Kamera für die nichtlineare $\gamma$-Kennlinie des Monitors ist durch die zweidimensionale Tiefpaßfilterung nur noch eingeschränkt wirksam. Es werden die Oberwellen der Vorkorrektur besonders bei hochfrequenten Signalen (Kanten) nicht oder geschwächt übertragen.
- Die durch die $\gamma$-Kennlinie des Monitors und die logarithmische Kennlinie der Rezeptoren im Auge dann hervorgerufene Unsymmetrie der Überschwinger und der Position einer Kante kann vorteilhaft vorkorrigiert werden.
- Die synthetische Kante kann zusätzlich die Tiefpaßeigenschaft von Monitor und Auge vorentzerren im Sinne einer "Aperturkorrektur".

Fig. 8 zeigt ein entsprechend vorkorrigiertes Kantensignal und die sich durch die gewählte Interpolationsfilterung ergebende Kante (Teilung der Abszisse in "Fernsehzeilen"). Das stärkere Überschwingen zu Weiß hin ergibt sich durch die Ausnutzung der größeren Empfindlichkeit des visuellen Systems in Bereichen geringer Helligkeit. Diese Eigenschaft ergibt sich aus der logarithmischen Kennlinie der Rezeptoren bzw. dem Weber-Fechner'schen Gesetz.

Ersichtlich ist die Steilheit der synthetischen Kante um einen wählbaren Faktor größer. Ebenfalls ist bei der Vorkorrektur die Positionsveränderung der Kanten berücksichtigt. Das im RAM verfügbare Detailsignal wird errechnet aus der Differenz der gewünschten vorkorrigierten synthetischen Kante mit dem sich aus der Bandbegrenzung ergebenden originalen Kantensignal (Fig. 8).

Es konnte erfolgreich gezeigt werden, daß eine vertikale Kantenversteilerung in Verbindung mit einer empfangsseitigen Interpolationsfilterung erhebliche Bildqualitätsverbesserungen ermöglicht. Im einzelnen konnte gezeigt werden:

(1) Die Bildqualität der empfangsseitigen Interpolationsfilterung kann durch eine nichtlineare Kantenversteilerung · verbessert werden. Dies zeigen subjektive Tests.

(2) Mit einer Kantenversteilerung auf der Basis eines synthetischen "idealen" Kantenverlaufes kann eine Einbeziehung der linearen und nichtlinearen Eigenschaften von Monitor und visuellem System (Weber-Fechner'sche Gesetz) vorgenommen werden. Hierdurch ergibt sich mit der prinzipiell wählbaren Versteilerung der Kantenflanke eine optimale Anpassung der nichtlinearen Versteilerung an das Wiedergabesystem und das visuelle System.

(3) Bei Zeilensprungwiedergabe im Hochzeilenmodus kann eine Ausfüllung der spektralen Lücken zu etwa 80 % vorgenommen werden ohne störendes Flackern bei natürlichen Bildern.

(4) Eine große Robustheit gegenüber Rauschen ist gegeben. Um flatternde Kanten (busy edges) bei rauschgestörten Bildern zu vermeiden, wurde eine "soft decision" realisiert.

Im folgenden werden Verfahren zu einer zweidimensionalen Kantenversteilerung - im Gegensatz zu den bisher behandelten Verfahren zur vertikalen Kantenversteilerung - bei geeigneter Interpolationsfilterung vorgestellt.

Auch unter der Randbedingung einer zweidimensionalen Interpolationsfilterung ergeben sich grundsätzlich neue verbesserte Möglichkeiten einer nichtlinearen Kantenversteilerung. Es sei hierzu ein Fernsehsignalspektrum betrachtet, das eine quadratische Auflösungsgrenze $f_c{}^y$, $f_c{}^x$ nach Fig. 9 aufweist. Ein solches Spektrum entsteht beispielsweise in Verbindung mit einer Interpolationsfilterung und einer Bandbegrenzung entsprechend der Schachbrettfrequenz. Es lassen sich nun jeweils durch horizontale bzw. vertikale Filterung die beiden gestrichelt eingetragenen Bänder erzeugen. Bei der Kantenversteilerung in horizontaler (vertikaler) Richtung wird nun zur Kantendetektion jeweils das in vertikaler (horizontaler) Richtung begrenzte Band verwendet. Das Spektrum wird dadurch in horizontaler und vertikaler Richtung spektral erweitert (schraffierte Flächen).

In verschiedener Hinsicht ist eine solche Signalverarbeitung besonders vorteilhaft:

(1) Die zur Kantendetektion vorgenommene Interpolationsfilterung in der jeweils orthogonalen Richtung reduziert die Rauschempfindlichkeit, da Rauschkomponenten aus der jeweils gerade nicht versteilerten Richtung abgetrennt werden und zur Störung der Kantenerkennung nicht beitragen können.

(2) Die in natürlichen Bildern besonders häufigen horizontalen und vertikalen Strukturen werden versteilert und damit die Bildschärfe in diesen Richtungen erhöht.

(3) In horizontaler und vertikaler Richtung ist das visuelle System besonders empfindlich bei der Erkennung von Kanten und Linien (oblique effect).

Die Darstellung auf dem HDTV-Monitor kann prinzipiell mit oder ohne Zeilensprung vorgenommen werden. Empfangsseitig liegt ein Zeilensprungsignal vor, aus dem durch die Interpolationsfilterung ein hochzeiliges Bildsignal mit beispielsweise 1250 Zeilen gewonnen wurde. Dieses Signal ist für eine progressive Wiedergabe unmittelbar geeignet und kann für eine (hochzeilige) Zeilensprung-Wiedergabe in zwei Halbbilder aufgeteilt werden.

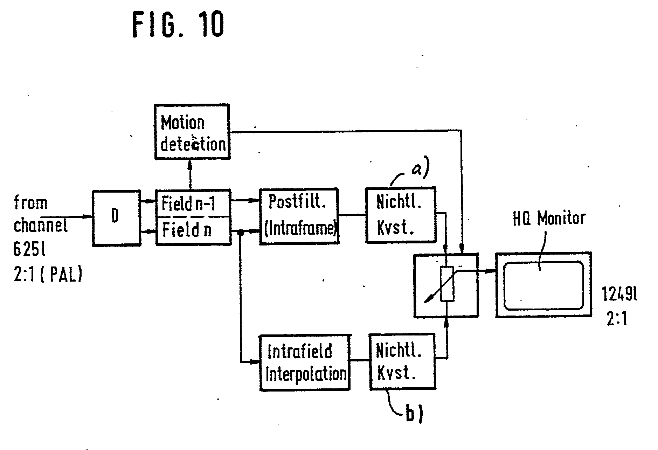

Besonders günstig hat sich für die Verarbeitung von Standardfernsehsignalen mit 625 Zeilen, Zeilensprung 2:1, eine nichtlineare Kantenversteilerung in Verbindung mit einer bewegungsadaptiven Vollbildwiedergabe mit Interpolationsfilterung gezeigt (Fig. 10). Das 625-Zeilen-Standardsignal wird dabei über einen Demultiplexer D halbbildweise gespeichert (field n-1, field n). Ruhende und schwach bewegte Bildteile werden vollbildweise verarbeitet und einer Interpolationsfilterung (Postfilt., Intraframe) für hohe Ortsauflösung unterzogen. Schneller bewegte Bildbereiche werden halbbildweise zu einem Hochzeilensignal verarbeitet. Letzteres geschieht durch eine vertikale Interpolationsfilterung (Intrafield interpol.) im Halbbild.

Beide interpolierten Signale können nun vorteilhaft einer nichtlinearen vertikalen Kantenversteilerung unterzogen werden. Im Falle a) der Fig. 10 wird das interpolierte Vollbildsignal kantenversteilert, im Falle b) der Fig. 10 wird das aus dem Halbbild interpolierte Hochzeilensignal kantenversteilert. Im letzteren Falle ist eine Kantenversteilerung besonders interessant, da dieser Mode für bewegte Bildbereiche zwangsläufig eine geringere vertikale Auflösung auf weist zugunsten einer höheren zeitlichen Auflösung durch echte Halbbilddarstellung. Zwischen beiden Moden wird weich umgesteuert. Diese Umsteuerung erfolgt aufgrund eines Bewegungsdetektors näherungsweise bewegungsproportional. Das Signal wird dann vom Hochqualitätsmonitor (HQ-Monitor) beispielsweise im hochzeiligen (1249 Z.) Zeilensprung wiedergegeben.

**Patentansprüche**

1. Verfahren zur Wiedergabe von Fernsehsignalen mit verbesserter Bildqualität, wobei sendeseitig eine Standardbildabtastung und eine standardzeilige Übertragung mit Zeilensprung erfolgt und wobei empfangsseitig eine Interpolationsfilterung des übertragenen Standardsignals zur Gewinnung eines hochzeiligen Signals für die Wiedergabe auf einem HDTV-Monitor erfolgt, dadurch gekennzeichnet, daß zur nichtlinearen Kantenversteilerung in die durch die Interpolationsfilterung entstehenden spektralen Lücken im Bildsignal Zusatzsignale hinzugefügt bzw. eingefügt werden, die durch Differenzbildung von Bildabtastwerten an den Kanten aus dem interpolierten Empfangssignal erzeugt werden und/oder aus Signalformparametern, wie Lage der Kanten, Steigung, Amplitude, mittlere Helligkeit ..., synthetisiert werden, indem ein vorkorrigiertes Kantensignal, dessen Verlauf die Parameter des Wiedergabesystems und des visuellen Systems berücksichtigt, mit dem durch das Übertragungssystem vorgegebene, maximal steile Kantensignal durch Differenzbildung erzeugt wird.

2. Verfahren nach Anspruch 1, dadurch gekennzeichnet, daß aus dem interpolierten Empfangssignal Kantenlage und Sprunghöhe der Kanten ermittelt werden, und daß aus dem durch die Filterflanke der empfangsseitigen Interpolationsfilterung festgelegten Sprungverlauf durch Addition eines synthetischen Korrektursignals eine synthetische Sprungflanke erzeugt wird, wobei das synthetische Korrektursignal durch eine aus der Sprunghöhe abgeleitete Detailsignalamplitude amplitudenabhängig bewertet wird.

3. Verfahren nach Anspruch 1 oder 2, dadurch gekennzeichnet, daß für das vorkorrigierte Kantensignal die nichtlineare γ-Kennlinie des Monitors, die durch die Monitorspotwirkung zustande kommende zweidimensionale Tiefpaßfilterung, die logarithmische Rezeptorkennlinie des Betrachters und einen zweidimensionalen Tiefpaß des visuellen Systems berücksichtigt wird.

4. Verfahren nach Anspruch 1, dadurch gekennzeichnet, daß die Ausfüllung der durch die empfangsseitige Interpolationsfilterung entstehenden spektralen Lücken zu 80% vorgenommen wird.

5. Verfahren nach Anspruch 1, dadurch gekennzeichnet, daß eine Interpolationsfilterung des Empfangssignals in zwei zueinander senkrechten (orthogonalen) Richtungen vorgenommen wird, daß eine Kantenversteilerung in horizontaler Richtung angewendet wird auf das in vertikaler Richtung bandbegrenzte Signal, und eine Kantenversteilerung in vertikaler Richtung angewendet wird auf das in horizontaler Richtung bandbegrenzte Signal.

6. Verfahren nach Anspruch 1, dadurch gekennzeichnet, daß eine bewegungsadaptive Vollbildwiedergabe mit Interpolationsfilterung vorgenommen wird, daß für ruhende und schwach bewegte Bildbereiche eine Kantenversteilerung für das Vollbild vorgenommen wird, daß für stärker bewegte Bildbereiche eine Kantenversteilerung im Halbbild vorgenommen wird, und daß zwischen beiden Signalverarbeitungsmoden bewegungsproportional umgesteuert wird.

## Revendications

1. Procédé de reproduction de signaux de télévision avec une qualité d'image améliorée, selon lequel on effectue côté émission un balayage d'image standard et une transmission à nombre de lignes standard avec entrelacement de lignes et on effectue côté réception un filtrage d'interpolation du signal standard transmis pour obtenir un signal de haute définition propre à la reproduction sur un moniteur TV de haute définition, caractérisé en ce que, pour réaliser un redressement non linéaire de la pente des bords, on ajoute au signal d'image ou on insère dans celui-ci des signaux additionnels dans les brèches spectrales résultant du filtrage d'interpolation, lesquels signaux additionnels sont produits à partir du signal de réception interpolé par différence de valeurs de balayage d'image sur les bords, et/ou sont synthétisés à partir de paramètres de forme du signal, comme la position des bords, la pente, l'amplitude, la luminosité moyenne, de manière à produire, par différence avec le signal de bord à pente maximale prédéterminé par le système de transmission, un signal de bord précorrigé dont l'allure prend en considération les paramètres du système de reproduction et du système visuel.

2. Procédé selon la revendication 1, caractérisé en ce qu'on détermine à partir du signal de réception interpolé la position des bords et la hauteur d'entrelacement des bords, et en ce qu'on génère un flanc d'impulsion d'entrelacement synthétique à partir de l'allure de l'entrelacement déterminée au moyen des flancs d'impulsion du filtrage d'interpolation côté réception, et par addition d'un signal correcteur synthétique, le signal correcteur synthétique étant évalué en fonction de l'amplitude à partir de l'amplitude d'un signal de détail dérivée de la hauteur d'entrelacement.

3. Procédé selon la revendication 1 ou la revendication 2, caractérisé en ce que, pour la production du signal de bord précorrigé on prend en considération la caractéristique γ non linéaire du moniteur, le filtrage passe-bas bidimensionnel ayant lieu à travers l'action du spot du moniteur, la caractéristique de réception logarithmique du téléspectateur et un filtrage passe-bas bidimensionnel du système visuel.

4. Procédé selon la revendication 1, caractérisé en ce que le remplissage des brèches spectrales provenant du filtrage d'interpolation côté réception est réalisé à 80%.

5. Procédé selon la revendication 1, caractérisé en ce que l'on réalise un filtrage d'interpolation du signal de réception selon deux directions perpendiculaires l'une à l'autre (orthogonales), en ce qu'un redressement de la pente des bords dans la direction horizontale est effectué sur le signal à bande limitée dans la direction verticale et en ce qu'un redressement de la pente des bords dans la direction verticale est effectué sur le signal à bande limitée dans la direction horizontale.

6. Procédé selon la revendication 1, caractérisé en ce que l'on assure une reproduction d'image entière asservie au mouvement avec filtrage d'interpolation, en ce que l'on effectue un redressement de la pente des bords pour l'image entière pour des zones d'image immobiles ou en faible mouvement, en ce que l'on effectue un redressement de la pente des bords pour une trame pour des zones d'image à mouvement rapide prononcé, en ce que l'on effectue une commutation entre les deux modes de traitement du signal de façon proportionnelle au mouvement.

**Claims**

1. Method for the reproduction of television signals with improved picture quality, wherein a standard image scanning and a standard line transmission with interlacing take place at the transmission end and an interpolation filtering of the transmitted standard signal takes place at the receiving end to obtain a high definition signal for the reproduction on a high definition television monitor, characterised thereby, that for the non-linear sharpening of edges, additional signals are added to or inserted in the spectral gaps in the picture signal, which arise due to the interpolation filtering, which additional signals are produced from the interpolated reception signal by difference formation of image scanning values at the edges and/or are synthesised from signal form parameters such as position of the edges, slope, amplitude, mean brightness and so forth, in that a preliminary corrected edge signal, the course of which takes the parameters of the reproducing system and of the visual system into consideration, is produced by difference formation with the steepest edge signal preset by the transmission system.

2. Method according to claim 1, characterised thereby, that edge position and step height of the edges are ascertained from the interpolated reception signal and that a synthetic step flank is produced through addition of a synthetic correction signal from the step course fixed by the filter flank of the interpolation filtering at the receiving end, wherein the synthetic correction signal is given a value in dependence on amplitude by a detail signal amplitude derived from the step height.

3. Method according to claim 1 or 2, characterised thereby, that the non-linear γ-characteristic of the monitor, the two-dimensional low-pass filtering that comes into being due to the monitor spot effect, the logarithmic receptor characteristic of the observer and a two-dimensional low-pass filter of the visual system are taken into consideration for the preliminarily corrected edge signal.

4. Method according to claim 1, characterised thereby, that the filling-out of the spectral gaps arising due to the interpolation filtering at the receiving end is undertaken to 80%.

5. Method according to claim 1, characterised thereby, that an interpolation filtering of the received signal is undertaken in two mutually perpendicular (orthogonal) directions, that a steepening of the edges in horizontal direction is applied to the signal band-limited in vertical direction and a steepening of the edges in vertical is applied to the signal band-limited in horizontal direction.

6. Method according to claim 1, characterised thereby, that a movement-adaptive complete image reproduction is undertaken with interpolation filtering, that a steepening of the edges for the complete image is undertaken for still and weakly moving image regions, that a steepening of the edges is undertaken in the half image for more strongly moving image regions and that switching-over between both signal processing modes in done proportionally to movement.

FIG. 1

FIG. 2

FIG. 3

FIG. 4

FIG. 5

FIG. 6

FIG. 7

FIG. 8

FIG. 9

# FIG. 10